# EUROPEAN PATENT SPECIFICATION

(11) **EP 2 871 118 B1**
(45) Date of publication and mention of the grant of the patent: **13.12.2017**
(21) Application number: 14163397.4
(22) Date of filing: 03.04.2014
(51) Int. Cl.: B62H 5/14

(54) **Bicycle lock**
Fahrradschloss
Cadenas pour bicyclette

(30) Priority: 08.11.2013 TW 102220865
(43) Date of publication of application: 13.05.2015
(73) Proprietor: ABUS August Bremicker Söhne KG, 58300 Wetter-Volmarstein (DE)
(72) Inventor: Hu, Chao-Hao, 51441 Changua County (TW)
(74) Representative: Manitz Finsterwald Patentanwälte PartmbB

(56) References cited:
- EP-A1- 0 443 217
- EP-A1- 1 712 458
- EP-A1- 2 159 138
- CN-Y- 201 202 326
- DE-A1- 10 240 570
- NL-A- 7 701 027

## Description

The invention as defined in claim 1, relates to an anti-rattling structure for a bicycle lock, in which a handle of an annular hoop of the bicycle lock is configured to be fixed by a fixing device and particularly to be embedded in a fixing groove, so that the annular hoop can be prevented from rattling and producing noise.

Particularly, the present invention as defined in claim 1, relates to a bicycle lock, preferably a so-called bicycle frame lock which is mounted or adapted to be mounted to a bicycle frame, the bicycle lock comprising a lock body and an annular hoop. The annular hoop is supported in the lock body and is rotatable between a closed position and an open position. In the closed position the annular hoop engages into a spoked wheel of the bicycle in order to block the spoked wheel against rotation. In the open position the annular hoop is retracted into the lock body in order to release the spoked wheel for rotation. The annular hoop comprises a laterally projecting handle for manually displacing the annular hoop from the open position into the closed position. The handle can for example be formed by a flat metal part having a grip head attached to its end.

The lock body comprises a housing which surrounds the annular hoop or parts of it. The housing has a longitudinal groove (i.e. a longitudinal slot), wherein the handle projects from the annular hoop through the groove so that a user may grip the handle and displace the annular hoop. The handle travels along the groove while the annular hoop moves between the open position and the closed position.

In a known bicycle lock of this type, the annular hoop is supported in the lock body with play at least while the annular hoop is in an intermediate position between the closed position and the open position. Also, the handle projects out of the housing with lateral play, i.e. at a certain distance, to the longitudinal boundaries of the longitudinal groove, at least in an intermediate position of the annular hoop. This facilitates the displacement of the annular hoop without unnecessary frictional resistance and also allows sufficient dimensional tolerances during manufacture of the bicycle lock.

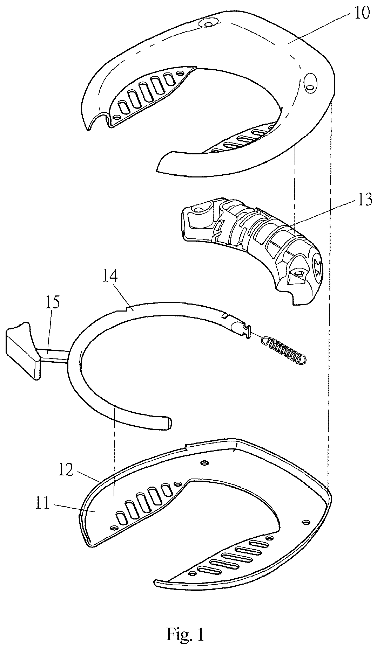

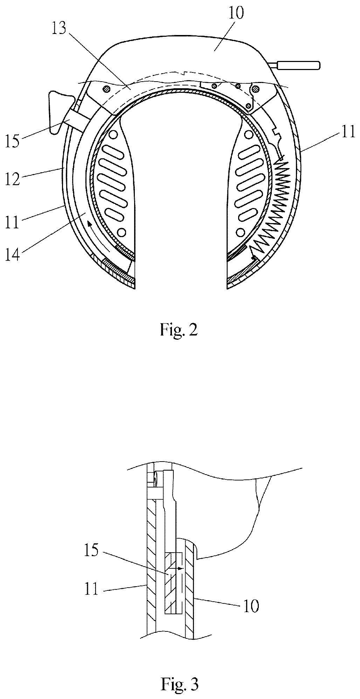

A known bicycle lock in shape of a horseshoe is shown in Figs. 1-3. The bicycle lock comprises a housing having two half shells 10, 11, and it is mounted to a bicycle body, particularly to a rear-wheel fork of the bicycle frame (not shown). A lock seat 13 and an annular hoop 14 are provided within the shells 10, 11 of the housing. A sliding groove 12 is provided in the shells 10, 11 of the housing, and a toggling handle 15 is configured to project from the annular hoop 14 through the sliding groove 12. The toggling handle 15 is fixedly attached to the annular hoop 14, e.g. welded integrally. After the annular hoop 14 engages through the wheel, the annular hoop 14 cooperates with a locking mechanism of the lock seat 13 to be locked in the closed position. After unlocking the locking mechanism by means of an associated key, the annular hoop 14 is free to return to its open position (either manually or automatically by means of a coil spring).

However, the known bicycle lock in the shape of horseshoe has the following disadvantage. As explained, there is a gap between the annular hoop 14 and the shells 10, 11 of the housing, resulting in a certain play of the annular hoop 14 in its open position, so that the annular hoop 14 is not entirely fixed after the unlocking. Thus the annular hoop 14 may move left and right or up and down when the bicycle bumps on the road, causing an undesirable rattling noise. As such, after unlocking, the annular hoop 14 vibrates and impacts the shells 10, 11 so that the noise may be produced.

Document DE 102 40 570 A1, is considered the closest prior art, and discloses a bicycle lock having all of the features of the preamble of claim 1. Documents EP 2 159 138 A1 and NL 7 701 027 A disclose bicycle locks comprising a lock body and a rotatable annular hoop, wherein a handle projects from the annular hoop through a groove provided in a housing of the lock body.

Accordingly, it is an object of the present invention as defined in claim 1, to provide a bicycle lock which is less susceptible to an undesirable rattling noise when the bicycle moves while the annular hoop is in its open position and which is simple and cheap to produce.

According to the invention, this object is solved by a bicycle lock having the features of claim 1.

In order to prevent the annular hoop from rattling a fixing device holds the handle without play (i.e. the fixing device firmly holds the handle) when the annular hoop is brought into the open position. The fixing device thereby fixes the handle, particularly against a movement other than back in the direction of the closed position of the annular hoop. Therefore, also the annular hoop is firmly held when the annular hoop is in the open position. This prevents the annular hoop from vibrating and causing a rattling noise while the bicycle travels on a bumpy road. This effect of indirectly fixing the annular hoop (by means of the fixing device acting on the handle) is independent of the locking function of a locking mechanism (e.g. key-operated) which is provided in the bicycle lock for locking the annular hoop in its closed position.

The fixing device holds the handle such that at least a lateral play is eliminated, i.e. a play in a transverse direction to the direction of travel of the handle when the annular hoop moves into the open position.

In connection with the invention as defined in claim 1, a "transverse" direction is to be understood as a perpendicular (i.e. 90°) or an oblique direction (i.e. < 90°, but > 0°), wherein a perpendicular direction is generally preferred.

Optionally the fixing device may also serve as an abutment for the handle with respect to its direction of travel when the annular hoop moves into its open position. For example, the annular hoop can be biased into the direction of its open position by means of a coil spring. In this case the coil spring draws the handle towards and/or into the fixing device when the annular hoop is released from its closed position.

The fixing device may for example be formed from a hard or soft plastic material and/or a resilient material.

The fixing device comprises two fixing sections which form a fixing groove for receiving the handle without play when the annular hoop is moved into its open position. The two fixing sections embrace the handle from two opposing sides, thereby eliminating a lateral play to both sides of the handle. For example, the fixing device may be formed as a bracket.

Particularly, such a fixing groove can have a constant width, or a decreasing width with respect of the direction of travel of the handle (when the annular hoop moves into the open position), or a combination thereof. For example, the two fixing sections can be chamfered and may comprise two fixing surfaces which are inclined at an entry side of the fixing groove and extend parallel at a main part of the fixing groove.

Alternatively or additionally, the two fixing sections can be formed by fixing pads (e.g. formed by tongues), which preferably have flat surfaces for receiving the handle of the annular hoop.

The fixing device preferably holds the handle without play by one or more of the following kinds of mutual engagement:
(a) Elastic engagement: The fixing sections can for example be urged against the handle (when the annular hoop is in the open position) by means of their own elasticity (particularly by forming the fixing sections from an elasic material and/or as an elastic spring arm). Alternatively, the handle can be formed from an elasic material and/or as an elastic spring arm. The force generated by the elasticity preferably extends transversely to the direction of travel of the handle (when the annular hoop moves into the open position).
(b) Form-locking engagement: The fixing sections and the handle can for example have a complementary shape so that the fixing sections and the handle mutually engage in a form-fitting manner. As a result, the connection between the fixing sections and the handle is particularly stable when the annular hoop is in the open position.
(c) Force-locked engagement: The fixing sections and the handle can for example interconnect in frictional engagement, thereby eliminating an undesirable play. Alternatively or additionally, the fixing sections and/or the handle can for example comprise a ramp, i.e. a surface which is sloped with respect to the direction of travel of the handle (when the annular hoop moves into the open position), so that fixing sections and/or the handle is/are deflected in a transverse direction when the annular hoop is moved into the open position, thereby creating a force-locked engagement.
(d) Snap-fitting engagement: The fixing sections can for example snap into engagement with the handle - or vice versa - when the annular hoop reaches the open position, in order to hold the handle in a stable position and without play. To this end, the fixing sections can be resilient and/or form-locking with the handle.

Two or more of these measures (a) to (d) can also be used in combination.

The lock body comprises an inner housing which serves as a lock seat for a locking mechanism, this locking mechanism being adapted to lock the annular hoop in the closed position, wherein the fixing device (i.e. the two fixing sections) is integrally formed with the inner housing. The fixing device therefore is formed as a single part together with an inner housing which is already provided for the locking mechanism of the bicycle lock and which preferably is made from a plastic material. As such, a particularly simple and cheap production of the fixing device is possible.

The invention as defined in claim 1, has particular advantage if the annular hoop is supported in the lock body with play while the annular hoop is in an intermediate position between the closed position and the open position. In this case, while the annular hoop may be easily displaced between the open position and the closed position due to the play of the annular hoop with respect to the lock body, such an annular hoop is particularly susceptible to an undesirable rattling noise.

The lock body of the bicycle lock may have a horseshoe shape, comprising a first leg and a second leg which surround a receiving space for receiving the spoked wheel of the bicycle. The housing of the bicycle lock may comprise two shells fixed to one another.

The invention as defined in claim 1, will now be described in an exemplary embodiment with respect to the drawings.
Fig. 1 is an exploded view of a known bicycle lock.
Fig.2 is a front sectional view of the known bicycle lock.
Fig.3 is a side sectional view and vibrating schematic diagram of the known bicycle lock.
Fig.4 is an exploded view of a bicycle lock according to the present invention as defined in claim 1.
Fig.5 is a front sectional view of the bicycle lock according to the present invention as defined in claim 1.
Fig.6 is a side sectional view and vibrating schematic diagram of the bicycle lock according to the present invention as defined in claim 1.

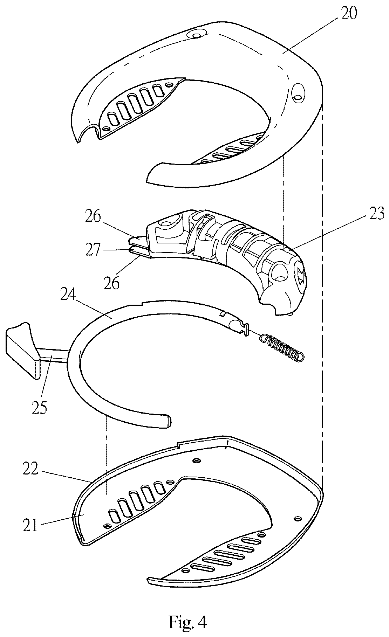

Referring to Figs.4, 5 and 6, the bicycle lock comprises a pair of half shells 20, 21 and furthermore an inner housing 23 and an annular hoop 24 provided in the shells 20 and 21. A sliding groove 22 is provided in the shells 20, 21, and a toggling handle 25 is configured to project through and travel along the sliding groove 22. The toggling handle 25 is welded with the annular hoop 24 integrally. The bicycle lock comprises a fixing device which in the shown embodiment has two symmetric fixing pads 26. The fixing pads 26 are provided on a side of the inner housing 23 close to the toggling handle 25. A fixing groove 27 is formed between the two fixing pads 26.

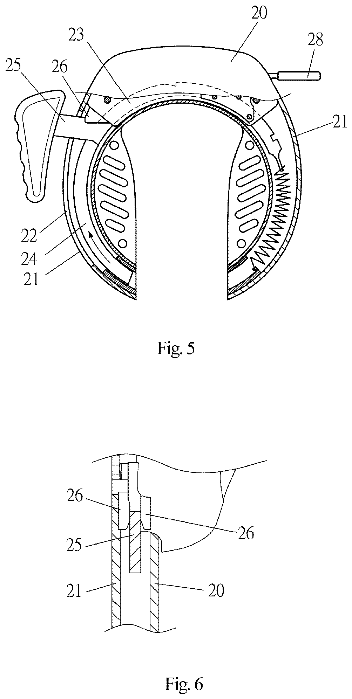

According to the structure described above, the following effects and advantages may be obtained:
(1) When displacing the toggling handle 25 to open the annular hoop 24 (as shown in Fig. 5), the toggling handle 25 is embedded in the fixing groove 27, so that the annular hoop 24 is fixing to prevent it from vibrating randomly, and thus the effect of a rattling suppression is achieved.
(2) When the toggling handle 25 is embedded in the fixing groove 27, the toggling handle 25 is fixed by the fixing groove 27, so that the annular hoop 24 cannot shake and impact the shells 20, 21 to make noise.
(3) When the bicycle is going to be locked, it is only necessary to turn the key 28 and push down the toggling handle 25, so that a linked lock pad of a drive shaft in the inner housing 23 lock the annular hoop 24 in its closed position. The operation is simple. Alternatively, the above-mentioned effect can be achieved by pulling down the toggling handle 25 in order to latch the annular hoop 24 by a spacer (not shown) in the inner housing 23.

### REFERENCE NUMERALS

### [Prior art]

- 10, 11: shell
- 12: sliding groove
- 13: lock seat
- 14: annular hoop
- 15: toggling handle

### [Invention, as defined in claim 1]

20, 21 shell
22 sliding groove
23 lock seat
24 annular hoop
25 toggling handle
26 fixing pads
27 fixing groove
28 key

## Claims

1. Bicycle lock, comprising a lock body and an annular hoop (24); wherein the annular hoop (24) is supported in the lock body and is rotatable between a closed position for engaging into a spoked wheel of the bicycle and an open position for releasing the spoked wheel, and wherein a handle (25) is attached to the annular hoop (24) for displacing the annular hoop (24) from the open position into the closed position; wherein the lock body comprises a housing (20, 21) and furthermore the lock body comprises an inner housing (23) for a locking mechanism adapted to lock the annular hoop (24) in the closed position, wherein the housing (20, 21) has a longitudinal groove (22), wherein the handle (25) projects from the annular hoop (24) through the groove (22); wherein the lock body comprises a fixing device (26) which holds the handle (25); wherein the fixing device (26) comprises two fixing sections which form a fixing groove (27) for receiving the handle (25) without play when the annular hoop (24) is in the open position, wherein the two fixing sections embrace the handle (25) from two opposing sides, thereby eliminating a lateral play to both sides of the handle (25); **characterized in that** the fixing device (26) is integrally formed with the inner housing (23).

2. Bicycle lock in accordance with claim 1,
**characterized in that**
the fixing groove (27) has a constant width, or a decreasing width with respect of the direction of travel of the handle (25) when the annular hoop (24) moves into the open position, or a combination thereof.

3. Bicycle lock in accordance with claim 1 or 2,
**characterized in that**
the two fixing sections are formed by fixing pads.

4. Bicycle lock in accordance with any of the preceding claims,
**characterized in that**
the fixing device (26) holds the handle (25) without play by at least one of:
- elastic engagement;
- form-locking engagement;
- force-locked engagement; and/or
- snap-fitting engagement.

5. Bicycle lock in accordance with any of the preceding claims,
**characterized in that**
the annular hoop (24) is supported in the lock body with play while the annular hoop (24) is in an intermediate position between the closed position and the open position.

6. Bicycle lock in accordance with any of the preceding claims,
**characterized in that**
the lock body has a horseshoe shape and comprises a first leg and a second leg which surround a receiving space for receiving the spoked wheel of the bicycle.

7. Bicycle lock in accordance with any of the preceding claims,
**characterized in that**
wherein the housing comprises two shells (20, 21) assembled to one another.

## Patentansprüche

1. Fahrradschloss, umfassend einen Schlosskörper und einen Rundbügel (24);
wobei der Rundbügel (24) im Schlosskörper abgestützt ist und zwischen einer geschlossenen Position zum Eingreifen in ein Speichenrad des Fahrrads und einer offenen Position zum Freigeben des Speichenrades drehbar ist, und
wobei ein Griff (25) an dem Rundbügel (24) angebracht ist, um den Rundbügel (24) von der offenen Position in die geschlossene Position zu versetzen;
wobei der Schlosskörper ein Gehäuse (20, 21) umfasst und überdies der Schlosskörper ein inneres Gehäuse (23) für einen Verriegelungsmechanismus umfasst, der dafür geeignet ist, den Rundbügel (24) in der geschlossenen Position zu verriegeln,
wobei das Gehäuse (20, 21) einen longitudinalen Schlitz (22) aufweist, wobei der Griff (25) von dem Rundbügel (24) durch den Schlitz (22) vorragt; wobei der Schlosskörper eine Fixiervorrichtung (26) umfasst, die den Griff (25) hält;
wobei die Fixiervorrichtung (26) zwei Fixierteile umfasst, die eine Fixierrille (27) bilden, um den Griff (25) ohne Spiel aufzunehmen, wenn der Rundbügel (24) in der offenen Position ist, wobei die beiden Fixierteile den Griff (25) von zwei gegenüberliegenden Seiten aus umfassen, wodurch ein laterales Spiel zu beiden Seiten des Griffs (25) beseitigt wird; **dadurch gekennzeichnet, dass** die Fixiervorrichtung (26) mit dem inneren Gehäuse (23) einstückig ausgebildet ist.

2. Fahrradschloss nach Anspruch 1,
**dadurch gekennzeichnet, dass**
die Fixierrille (27) eine konstante Breite oder eine abnehmende Breite in Bezug auf die Laufrichtung des Griffs (25), wenn sich der Rundbügel (24) in die offene Position bewegt, oder eine Kombination davon aufweist.

3. Fahrradschloss nach Anspruch 1 oder 2,
**dadurch gekennzeichnet, dass**
die beiden Fixierteile von fixierenden Ansätzen gebildet sind.

4. Fahrradschloss nach einem der vorhergehenden Ansprüche,
**dadurch gekennzeichnet, dass**
die Fixiervorrichtung (26) den Griff (25) ohne Spiel durch zumindest einen eines:
- elastischen Eingriffs;
- formschlüssigen Eingriffs;
- kraftschlüssigen Eingriffs und/oder
- Schnappeingriffs
hält.

5. Fahrradschloss nach einem der vorhergehenden Ansprüche,
**dadurch gekennzeichnet, dass**
der Rundbügel (24) im Schlosskörper mit Spiel abgestützt ist, während der Rundbügel (24) in einer Zwischenposition zwischen der geschlossenen Position und der offenen Position ist.

6. Fahrradschloss nach einem der vorhergehenden Ansprüche,
**dadurch gekennzeichnet, dass**
der Schlosskörper eine Hufeisenform aufweist und einen ersten Schenkel und einen zweiten Schenkel umfasst, welche einen Aufnahmeraum zum Aufnehmen des Speichenrades des Fahrrads umgeben.

7. Fahrradschloss nach einem der vorhergehenden Ansprüche,
**dadurch gekennzeichnet, dass**
das Gehäuse zwei, aneinander montierte Schalen (20, 21) umfasst.

## Revendications

1. Cadenas de bicyclette, comprenant un corps de cadenas et une boucle annulaire (24) ; dans lequel la boucle annulaire (24) est supportée dans le corps de cadenas et est capable de rotation entre une position fermée pour s'engager dans une roue à rayons de la bicyclette et une position ouverte pour libérer la roue à rayons, et dans lequel une manette (25) est attachée à la boucle annulaire (24) pour déplacer la boucle annulaire (24) depuis la position ouverte jusque dans la position fermée ;
dans lequel le corps de cadenas comprend un boîtier (20, 21) et en outre le corps de cadenas comprend un boîtier intérieur (23) pour un mécanisme de blocage adapté pour bloquer la boucle annulaire (24) dans la position fermée, dans lequel le boîtier (20, 21) a une rainure longitudinale (22), dans lequel la manette (25) se projette depuis la boucle annulaire (24) à travers la rainure (22) ; dans lequel le corps de cadenas comprend un dispositif de fixation (26) qui tient la manette (25) ;
dans lequel le dispositif de fixation (26) comprend deux sections de fixation qui forment une rainure de fixation (27) pour recevoir la manette (25) sans jeu quand la boucle annulaire (24) est dans la position ouverte, dans lequel les deux sections de fixation enserrent la manette (25) depuis deux côtés opposés, éliminant ainsi un jeu latéral vers les deux côtés de la manette (25) ;
**caractérisé en ce que** le dispositif de fixation (26) est formé de manière intégrale avec le boîtier intérieur (23).

2. Cadenas de bicyclette selon la revendication 1,
**caractérisé en ce que** la rainure de fixation (27) a une largeur constante, ou une largeur décroissante par rapport à la direction de déplacement de la manette (25) quand la boucle annulaire (24) se déplace jusque dans la position ouverte, ou une combinaison des deux.

3. Cadenas de bicyclette selon la revendication 1 ou 2,
**caractérisé en ce que** les deux sections de fixation sont formées par des patins de fixation.

4. Cadenas de bicyclette selon l'une quelconque des revendications précédentes,
**caractérisé en ce que** le dispositif de fixation (26) tient la manette (25) sans jeu par au moins un des suivants :
- un engagement élastique ;
- un engagement à blocage de forme ;
- un engagement à blocage de force ; et/ou
- un engagement par encliquetage.

5. Cadenas de bicyclette selon l'une quelconque des revendications précédentes,
**caractérisé en ce que** la boucle annulaire (24) est supportée dans le corps de cadenas avec jeu alors que la boucle annulaire (24) est dans une position intermédiaire entre la position fermée et la position ouverte.

6. Cadenas de bicyclette selon l'une quelconque des revendications précédentes,
**caractérisé en ce que** le corps de cadenas a une forme en fer à cheval et comprend une première branche et une seconde branche qui entourent un espace de réception pour recevoir la roue à rayons de la bicyclette.

7. Cadenas de bicyclette selon l'une quelconque des revendications précédentes,
**caractérisé en ce que** le boîtier comprend deux coques (20, 21) assemblées l'une à l'autre.
